# EUROPÄISCHE PATENTSCHRIFT

(11) **EP 3 617 680 B1**
(45) Veröffentlichungstag und Bekanntmachung des Hinweises auf die Patenterteilung: **01.01.2025**
(21) Anmeldenummer: 19174119.8
(22) Anmeldetag: 13.05.2019
(51) Int. Cl.: G01K 15/00, G01K 1/024

(54) **VERFAHREN ZUM KALIBRIEREN EINER TEMPERATURMESSEINRICHTUNG**
METHOD FOR CALIBRATING A TEMPERATURE MEASURING DEVICE
PROCÉDÉ D'ÉTALONNAGE D'UN DISPOSITIF DE MESURE DE TEMPÉRATURE

(30) Priorität: 29.08.2018 DE 102018121051
(43) Veröffentlichungstag der Anmeldung: 04.03.2020
(73) Patentinhaber: SIKA Dr.Siebert & Kühn GmbH & Co. KG., 34260 Kaufungen (DE)
(72) Erfinder: RÜMLER, Klaus, 34132 Kassel (DE)
(74) Vertreter: Walther Bayer Faber Patentanwälte PartGmbB

(56) Entgegenhaltungen:
- EP-A1- 2 793 008
- CN-U- 207 528 369
- US-A1- 2003 023 398
- US-A1- 2015 110 147

## Beschreibung

Die Erfindung betrifft ein Verfahren zum Kalibrieren einer Temperaturmesseinrichtung mit einer Temperaturmesseinheit und wenigstens einem an der Temperaturmesseinheit anschließbaren Sensor, wobei ein Temperaturkalibrator mit einer Sensoraufnahme bereitgestellt wird, in die der Sensor der Temperaturmesseinrichtung eingesetzt und auf eine Prüftemperatur aufgeheizt wird.

### STAND DER TECHNIK

Allgemein bekannt sind Temperaturmesseinrichtungen mit einer Temperaturmesseinheit und mit einem Sensor, der über ein Sensorkabel oder per Funk mit der Temperaturmesseinheit verbunden wird. Wird der Sensor zur Messung einer Temperatur eingesetzt, so kann diese üblicherweise auf einem Anzeigemittel der Temperaturmesseinheit angezeigt werden.

Übliche Sensoren basieren auf Thermoelementen, also aus einem Paar metallischer Leiter unterschiedlicher Materialien, die an einem Ende miteinander verbunden sind und die Temperaturmessung erfolgt unter Ausnutzung des sogenannten thermoelektrischen Effektes. Auch kommen Widerstandsthermometer vor, bei denen sich der elektrische Widerstand über der Temperatur ändert, wobei im Rahmen der vorliegenden Erfindung auch weitere Messelemente eingesetzt werden können.

Die Messsensoren sind dabei zumeist in einem Sensorgehäuse eingefasst und die Ermittlung und Ausgabe des Temperaturmesswertes erfolgt über die Temperaturmesseinheit. Eine Temperaturmesseinrichtung umfasst im vorliegenden Sinne eine Temperaturmesseinheit und einen oder mehrere Sensoren, die jeweils über Sensorkabel oder auch drahtlos mit der Temperaturmesseinheit verbunden sind.

Aufgrund von Alterungseffekten können sich über eine längere Gebrauchsdauer Abweichungen bei der Erfassung von Temperaturmesswerten ergeben, sodass Temperaturmesseinrichtungen regelmäßig kalibriert werden müssen, insbesondere wenn diese in einem technischen Umfeld eingesetzt werden, in dem eine sehr genaue Temperaturermittlung notwendig ist. Zur Kalibrierung solcher Temperaturmesseinrichtungen dienen Temperaturkalibratoren, und die Sensoren können in Sensoraufnahmen solcher Temperaturkalibratoren eingesetzt werden, und die Sensoren werden über ein Heizmittel des Temperaturkalibrators auf eine gesicherte Temperatur aufgeheizt, sodass mit dieser Vorgabetemperatur des Temperaturkalibrators schließlich ein Vergleich stattfinden kann zwischen der ausgegebenen Temperatur durch die Temperaturmesseinheit und der Kalibriertemperatur des Temperaturkalibrators.

Ein solcher Temperaturkalibrator ist beispielweise aus der CN 207 528 369 U bekannt. Das Thermometer (2) wird in einem Wassertank (1) mit konstanter Temperatur platziert. Das Thermometer (2) und der Wassertank (1) senden beide gesammelte Temperaturdaten über einen Temperaturdatensammler (4) an ein Überwachungsterminal (3). Das Überwachungsterminal (3) berechnet einen Kalibrierungswert und sendet ihn über ein Präzisionskalibrierungs-Terminal (5) an das Thermometer (2), wo er in einem Speicher gespeichert wird. Das Thermometer (2) zeigt die mit dem Kalibrierwert abgeglichenen Temperaturwerte an.

Ein weiterer solcher Temperaturkalibrator ist beispielsweise aus der EP 2 793 008 A1 bekannt. Die Sensoraufnahme ist in einer Kalibrierhülse eingebracht, die mit einer Heizeinrichtung auf die Kalibriertemperatur aufgeheizt werden kann. Über ein entsprechendes Anzeigemittel zeigt dabei der Temperaturkalibrator die aktuelle insbesondere hochgenaue, geprüfte und damit gesicherte Kalibriertemperatur an.

Nach erfolgter Messung der Abweichung zwischen der Vorgabetemperatur des Temperaturkalibrators und der angezeigten Temperatur auf der Temperaturmesseinheit der Temperaturmesseinrichtung kann eine Abweichung ermittelt werden, die schließlich entweder zur Nachjustage der Temperaturmesseinheit herangezogen wird oder die Abweichung wird für zukünftige Messungen mit der Temperaturmesseinrichtung herausgerechnet.

Derartige Kalibrierungen von Temperaturmesseinrichtungen mit Temperaturkalibratoren sind zeitintensiv, und der Sensor muss über einen längeren Kalibrierzeitraum von der eigentlichen Anwendung entfernt und in die Sensoraufnahme eingefügt werden. Weiterhin ergibt sich durch die spätere Verwendung der ermittelten Abweichung der Temperaturmessung ein zusätzlicher Aufwand, die Temperaturmesseinrichtung entsprechend zu justieren oder den Wert der Temperaturabweichung bei zukünftigen Temperaturmessungen herauszurechnen. Daraus ergibt sich die Forderung, die Temperaturkalibrierung insbesondere in Verbindung mit der Temperaturmesseinrichtung und der Verwendung des später ermittelten Kalibrierwertes zu verbessern.

### OFFENBARUNG DER ERFINDUNG

Aufgabe der Erfindung ist die Verbesserung eines Verfahrens zum Kalibrieren einer Temperaturmesseinrichtung mittels eines Temperaturkalibrators. Dabei soll der Kalibrierwert auf vorteilhafte und insbesondere zeitsparende Weise Verwendung finden.

Diese Aufgabe wird ausgehend von einem Verfahren gemäß dem Oberbegriff des Anspruches 1 und ausgehend von einem Temperaturkalibrator gemäß dem Oberbegriff des Anspruches 8 mit den jeweils kennzeichnenden Merkmalen gelöst. Vorteilhafte Weiterbildungen der Erfindung sind in den abhängigen Ansprüchen angegeben.

Die beanspruchte Erfindung sieht vor, dass ein Kommunikationskanal zur Datenübertragung zwischen dem Temperaturkalibrator und der Temperaturmesseinrichtung aufgebaut wird und dass eine Übertragung eines Kalibrierwertes vom Temperaturkalibrator an die Temperaturmesseinrichtung mittels des Kommunikationskanals erfolgt.

Kerngedanke der Erfindung ist der Aufbau einer Kommunikation zwischen der Temperaturmesseinrichtung, also entweder zwischen der Temperaturmesseinheit oder dem Sensor, und dem Temperaturkalibrator. Der Aufbau eines Kommunikationskanals ermöglicht dabei die Übertragung des Kalibrierwertes vom Temperaturkalibrator an die Temperaturmesseinrichtung, sodass beispielsweise in der Temperaturmesseinheit der ermittelte Kalibrierwert abgespeichert wird und für die zukünftige Temperaturanzeige Berücksichtigung finden kann. Der übertragene Kalibrierwert kann dabei einem spezifischen Sensor zugeordnet werden. Wird nach der Kalibrierung die Temperaturmesseinrichtung wieder in Betrieb genommen, so kann die Ausgabe der gemessenen Temperatur für jeden Sensor bereits automatisiert korrigiert angezeigt werden.

Im Sinne der Erfindung kann der Kommunikationskanal entweder drahtlos oder drahtgebunden aufgebaut werden. Dabei ist es denkbar, die Temperaturmesseinheit mit dem Temperaturkalibrator über ein Datenkabel zu verbinden, jedoch ist es insbesondere vorteilhaft, wenn der Kommunikationskanal drahtlos ausgebildet wird, beispielsweise mittels einer Nahfeldkommunikation (NFC).

Im Rahmen der Kalibrierung kann erfindungsgemäß zunächst vor dem Einsetzen des Sensors in die Sensoraufnahme ein Ist-Temperaturwert von der Temperaturmesseinrichtung an den Temperaturkalibrator mittels des Kommunikationskanals übertragen werden. Eine Datenübertragung über den Kommunikationskanal ist somit sowohl von dem Temperaturkalibrator an die Temperaturmesseinrichtung als auch von der Temperaturmesseinrichtung an den Temperaturkalibrator möglich. Beispielsweise kann der Ist-Temperaturwert im Temperaturkalibrator abgespeichert werden, sodass die Temperaturabweichung, die wiedergegeben wird im Kalibrierwert, bereits vom Temperaturkalibrator ermittelt und an die Temperaturmesseinrichtung übertragen werden kann. Voraussetzung hierfür ist insbesondere die Einstellung einer Kalibriertemperatur, die ähnlich oder gleich der vorwiegenden Messtemperatur des eingesetzten Sensors der Temperaturmesseinrichtung ist.

Auch ist es denkbar, dass nach der Übertragung des Kalibrierwertes vom Temperaturkalibrator an die Temperaturmesseinrichtung der Kalibrierwert von einem Prozessor der Temperaturmesseinheit zur Kalibrierung der Temperaturmessung erfasst und verarbeitet wird. Die Erfassung und Verarbeitung des Kalibrierwertes erfolgt dabei elektronisch, und vorteilhafterweise insbesondere ohne Einwirkung eines Bedieners.

Weiterhin ist es möglich, dass nach der Erfassung und Verarbeitung des Kalibrierwertes vom Prozessor der Temperaturmesseinheit ein Temperaturkontrollwert einer Anschlussmessung von der Temperaturmesseinheit an den Temperaturkalibrator übertragen wird. Auch der Temperaturkontrollwert kann im Temperaturkalibrator abgespeichert und damit dokumentiert werden.

Zur Datenspeicherung ist erfindungsgemäß ein Datenspeicher im Temperaturkalibrator integriert, wobei wenigstens der Kalibrierwert für den oder zugeordnet für jeden kalibrierten Sensor im Datenspeicher abgelegt wird. So kann über einen längeren Zeitraum und insbesondere über mehrere Kalibriervorgänge ermittelt werden, ob ein Sensor bereits einer Alterung unterliegt und es kann entschieden werden, einen Sensor beispielsweise auszutauschen. Der Temperaturkalibrator kann dabei ein Anzeigemittel aufweisen, auf dem die Kalibrierhistorie jedes zu kalibrierenden Sensors angezeigt werden kann. Ergeben beispielsweise die Kalibrierwerte zunehmende, deutlich größer werdende Temperaturabweichungen zwischen der geeichten Temperatur und der mit der Temperturmesseinheit ausgegebenen Temperatur, so kann entsprechend entschieden werden, ob ein Sensor ausgetauscht werden muss oder nicht.

Erfindungsgemäß erfolgt diese Analyse auch automatisiert, sodass bei aufeinander folgenden Kalibrierungen eines Sensors mittels des Temperaturkalibrators eine Analyse von Kalibrierwerten durchgeführt wird, womit ein Alterungsprofil für den oder zugeordnet für jeden kalibrierten Sensor erstellt wird. Dieses Alterungsprofil kann insbesondere auf einem Anzeigemittel des Temperaturkalibrators angezeigt werden.

Die Datenübertragung zwischen dem Temperaturkalibrator und der Temperaturmesseinheit kann sowohl zur Temperaturmesseinheit oder auch zum Sensor erfolgen. Hierfür kann der Sensor ein Datenmodul aufweisen, beispielsweise in oder in Verbindung mit einem Stecker, mit dem der Sensor über das Sensorkabel mit der Temperaturmesseinheit verbunden wird. Das Datenmodul ist dabei dem Sensor selbst zugeordnet und überträgt der Temperaturkalibrator den Kalibrierwert an das Datenmodul, so kann der Sensor in Verbindung mit dem Datenmodul als bereits wieder kalibrierter Sensor eingesetzt werden, ohne dass die Temperaturmesseinheit selbst den Kalibrierwert empfängt, erfasst und verarbeitet. Das Datenmodul kann auch im Sensorkopf selbst angeordnet sein, jedoch darf der Sensor demnach nicht für zu hohe Temperaturen eingesetzt werden, da das Datenmodul sonst Schaden nehmen kann. Daher ist es vorteilhaft, das Datenmodul beispielsweise in baulicher Einheit mit einem Stecker des Sensors auszuführen, mit dem der Sensor mit der Temperaturmesseinheit verbunden wird.

Erfindungsgemäß weist der Sensor ein optisch oder mittels eines elektromagnetischen Signals auslesbaren ID-Träger auf, wobei vor der Kalibrierung der ID-Träger des Sensors von dem Temperaturkalibrator ausgelesen wird. Beispielsweise ist der ID-Träger als RFID-Tag ausgeführt, und in oder in Verbindung mit dem Temperaturkalibrator ist eine ID-Leseeinheit vorhanden, die den Sensor automatisch erkennt. In diesem Zusammenhang kann beispielsweise das Alterungsprofil und damit die Kalibrierhistorie des spezifischen Sensors aus dem Datenspeicher hochgeladen und angezeigt werden.

Zur Ausführung des erfindungsgemäßen Verfahrens weist der Temperaturkalibrator ein Kommunikationsmodul auf, mit dem der Kommunikationskanal zur Temperaturmesseinrichtung aufgebaut und mit dem eine Analyse von ermittelten Kalibrierwerten durchgeführt werden kann. Das Kommunikationsmodul kann dabei auch in baulicher Einheit mit einer Steuerungseinheit zum Betrieb des Temperaturkalibrators ausgeführt sein.

Die Erfindung richtet sich weiterhin auf einen Temperaturkalibrator zur Ausführung des erfindungsgemäßen Verfahrens, wofür der Temperaturkalibrator erfindungsgemäß ein Kommunikationsmodul aufweist, mit dem der Kommunikationskanal zur Temperaturmesseinrichtung aufbaubar ist und mit dem eine Analyse von ermittelten Kalibrierwerten durchgeführt werden kann. Erfindungsgemäß weist der Temperaturkalibrator einen Datenspeicher zur Speicherung von Sensordaten auf. Insbesondere weist der Temperaturkalibrator ein Anzeigemittel auf, mit dem die Sensordaten insbesondere umfassend das Alterungsprofil und die Kalibrierhistorie des spezifischen Sensors angezeigt werden kann. Insbesondere kann über das Anzeigemittel des Temperaturkalibrators zunächst auch die Identifikation des erkannten Sensors angezeigt werden, sodass ein Bediener eine Rückbestätigung erhält, dass auch der richtige Sensor erkannt und mit dem zugehörigen Alterungsprofil in Verbindung gebracht werden kann.

Mit noch weiterem Vorteil können die Funktionen der Kalibrierung, der Justage und die Überprüfung des Sensors oder der Messeinrichtung vollständig automatisiert durchführbar sein. Insbesondere können die Prüf- und Einstellparameter für die Durchführung des Verfahrens in dem ID-Träger des Sensors abgelegt und aus diesem auslesbar sein, sodass die Kalibrierung, Justage und Überprüfung des Sensors und/oder der Temperaturmesseinheit ohne Notwendigkeit von Neueingaben dieser Parameter ausführbar sind.

Die im ID-Träger abgelegten Daten können beispielsweise Prüftemperaturen umfassen, die vom Temperaturkalibrator angefahren werden sollen, oder die Daten umfassen den Temperaturbereich, in dem der Sensor eingesetzt werden darf. Auch können die Daten den typischen Temperaturbereich der Anwendung umfassen, in dem dann die Prüfpunkte dichter liegen sollten, oder zulässige Messabweichungen des Sensors umfassen, um entscheiden zu können, ob bei kleinen Messabweichungen eine neue Justage überhaupt erforderlich ist oder bei sehr großen Messabweichungen der Sensor als defekt betrachtet werden muss. Auch können die Art der Linearisierung bzw. die Kennlinie in den Daten hinterlegt sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht einer Temperaturmesseinrichtung in Kommunikation mit einem Temperaturkalibrator gemäß der Erfindung,
- Figur 2: die schematische Ansicht einer Temperaturmesseinrichtung mit einem Sensor und mit einem ID-Träger in Anordnung auf dem Sensor sowie mit einem Datenmodul, das in Verbindung mit dem Sensor ausgeführt ist und
- Figur 3: eine schematische Ansicht einer Temperaturmesseinrichtung und einem Temperaturkalibrator mit einem Datenspeicher.

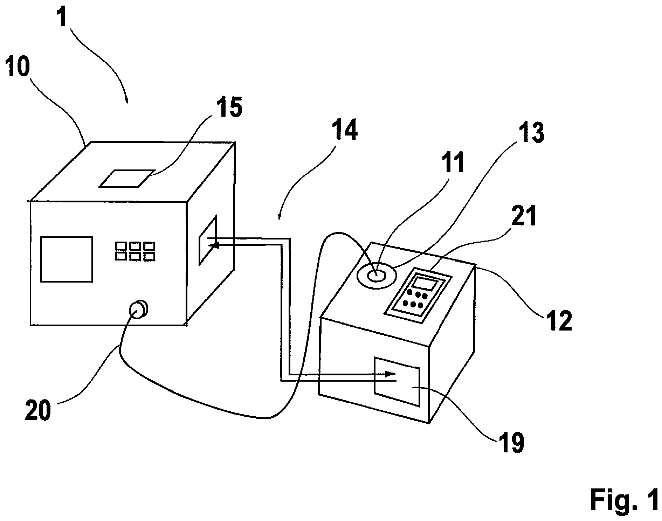

Figur 1 zeigt in einer schematischen Ansicht eine Temperaturmesseinrichtung 1 mit einer Temperaturmesseinheit 10 und mit einem Sensor 11, und der Sensor 11 ist über ein Sensorkabel 20 mit der Temperaturmesseinheit 10 verbunden. Weiterhin dargestellt ist ein Temperaturkalibrator 12 mit einer Sensoraufnahme 13, in die der Sensor 11 zur Kalibrierung eingesetzt ist. In schematisch dargestellter Weise ist die Temperaturmesseinheit 10 mit einem Prozessor 15 und der Temperaturkalibrator 12 ist mit einem Bedienfeld 21 ausgebildet.

Erfindungsgemäß wird zwischen der Temperaturmesseinrichtung 1 und dem Temperaturkalibrator 12 ein Kommunikationskanal 14 aufgebaut, und über den Kommunikationskanal 14 können Kalibrierwerte beispielsweise von dem Temperaturkalibrator 12 an die Temperaturmesseinrichtung 1 übermittelt werden. Die Übermittlung erfolgt dabei an die Temperaturmesseinheit 10, diese kann jedoch auch in nicht näher gezeigter Weise beispielsweise direkt an den Sensor 11 erfolgen.

Um den Kommunikationskanal 14 zwischen der Temperaturmesseinrichtung 1 und dem Temperaturkalibrator 12 aufzubauen, weist der Temperaturkalibrator 12 ein Kommunikationsmodul 19 auf, das beispielsweise ausgeführt ist als drahtlose Schnittstelle, insbesondere basierend auf einer Nahfeldkommunikation, beispielsweise Bluetooth oder WLAN.

Über den Kommunikationskanal 14 können Daten sowohl von der Temperaturmesseinrichtung 1, insbesondere von der Temperaturmesseinheit 10, an den Temperaturkalibrator 12 übermittelt werden, beispielsweise ein Ist-Temperaturwert vor der eigentlichen Kalibrierung und/oder ein Temperaturkontrollwert nach Abschluss der Kalibrierung. In der Hauptsache dient dabei der Kommunikationskanal 14 zur Übertragung eines Kalibrierwertes vom Temperaturkalibrator 12 an die Temperaturmesseinheit 10.

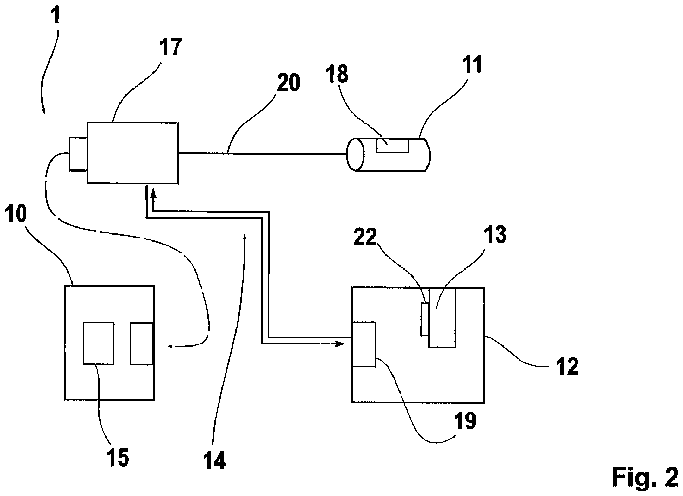

Figur 2 zeigt die Temperaturmesseinrichtung 1 in einem schematischen Aufbau mit der Temperaturmesseinheit 1 umfassend den Prozessor 15, und getrennt von der Temperaturmesseinheit 10 ist der Sensor 11 mit dem Sensorkabel 20 gezeigt. Am dem Sensor 11 gegenüberliegenden Ende des Sensorkabels 20 befindet sich ein Datenmodul 17, das als Steckkontaktmittel ausgeführt ist, welches in eine entsprechende Einrichtung an der Temperaturmesseinheit 10 eingesteckt werden kann. Die Darstellung zeigt einen Kommunikationskanal 14 zwischen dem Temperaturkalibrator 12 mit dem Kommunikationsmodul 19 und dem Datenmodul 17, und der Kommunikationskanal 14 kann beispielsweise drahtlos ausgeführt sein. Dasselbe gilt für die Ausführung, bei der der Prozessor 15 bereits im Sensor 1 integriert ist.

Weiterhin weist der Sensor 11 einen ID-Träger 18 auf, und wird der Sensor 11 in die Sensoraufnahme 13 eingeführt, so kann eine ID-Leseeinheit 22 den ID-Träger 18 auslesen, beispielsweise wenn der ID-Träger 18 als RFID-Tag ausgeführt ist. Damit kann der Temperaturkalibrator 12 die Identität des Sensors 11 ermitteln, und der mit dem Kommunikationskanal 14 an die Temperaturmesseinrichtung 1 übertragene Kalibrierwert kann dem Sensor 11 spezifisch zugeordnet sein.

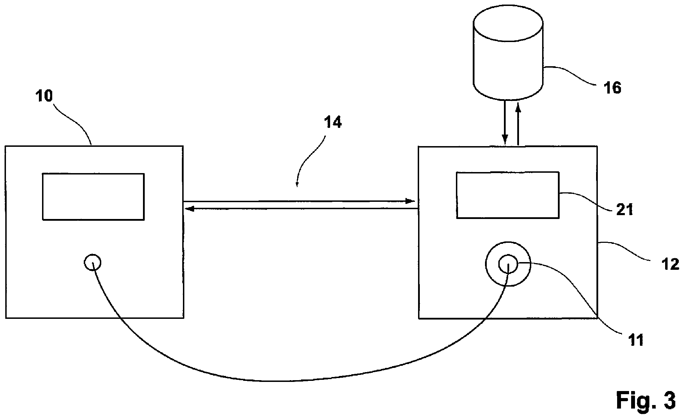

Figur 3 zeigt eine weitere schematische Ansicht der Temperaturmesseinheit 10 mit dem Sensor 11 in Anordnung im Temperaturkalibrator 12, und zwischen der Temperaturmesseinheit 10 und dem Temperaturkalibrator 12 ist ein Kommunikationskanal 14 aufgebaut. Weiterhin ist ein Datenspeicher 16 separat dargestellt, der auch in baulicher Einheit mit dem Temperaturkalibrator 12 ausgeführt sein kann, insbesondere kann der Datenspeicher 16 im Gehäuse des Temperaturkalibrators 12 integriert sein. Der Datenspeicher 16 kann mit besonderem Vorteil dazu dienen, spezifische Daten der Sensoren 11 abzulegen, und erfolgt eine Kalibrierung eines Sensors 11, kann die Kalibrierhistorie des spezifischen Sensors 11 aus dem Datenspeicher 16 ausgelesen und beispielsweise über ein Bedienfeld 21 des Temperaturkalibrators 12 angezeigt werden.

### Bezugszeichenliste:

- 1: Temperaturmesseinrichtung

- 10: Temperaturmesseinheit
- 11: Sensor
- 12: Temperaturkalibrator
- 13: Sensoraufnahme
- 14: Kommunikationskanal
- 15: Prozessor
- 16: Datenspeicher
- 17: Datenmodul
- 18: ID-Träger
- 19: Kommunikationsmodul
- 20: Sensorkabel
- 21: Bedienfeld
- 22: ID-Leseeinheit

## Patentansprüche

1. Verfahren zum Kalibrieren einer Temperaturmesseinrichtung (1) mit einer Temperaturmesseinheit (10) und wenigstens einem an der Temperaturmesseinheit (10) anschließbaren Sensor (11), wobei ein Temperaturkalibrator (12) mit einer Sensoraufnahme (13) bereitgestellt wird, in die der wenigstens eine Sensor (11) der Temperaturmesseinrichtung (1) eingesetzt und auf eine Prüftemperatur aufgeheizt wird, während der wenigstens eine Sensor (11) über ein Sensorkabel (20) mit der Temperaturmesseinheit (10) verbunden ist, wobei das Verfahren wenigstens die folgenden Schritte aufweist:
- Bereitstellen eines Temperaturkalibrators (12) mit einem Kommunikationsmodul (19),
- Aufbau eines Kommunikationskanals (14) zur Datenübertragung zwischen dem Temperaturkalibrator (12) und der Temperaturmesseinrichtung (1) mit dem Kommunikationsmodul (19) und
- Übertragung eines Kalibrierwertes vom Temperaturkalibrator (12) an die Temperaturmesseinrichtung (1) mittels des Kommunikationskanals (14),
wobei der wenigstens eine Sensor (11) einen optisch oder mittels eines elektromagnetischen Signals auslesbaren ID-Träger (18) aufweist und der Temperaturkalibrator (12) eine ID-Leseeinheit umfasst, wobei vor der Kalibrierung der ID-Träger (18) des wenigstens einen Sensors (11) von dem Temperaturkalibrator (12) zur automatischen Erkennung des wenigstens einen Sensors (11) ausgelesen wird, wobei ein Datenspeicher (16) im Temperaturkalibrator (12) integriert ist, wobei wenigstens der Kalibrierwert zugeordnet für jeden kalibrierten Sensor (11) im Datenspeicher (16) abgelegt wird, wobei bei aufeinander folgenden Kalibrierungen eines Sensors (11) mittels des Temperaturkalibrators (12) eine Analyse von Kalibrierwerten durchgeführt wird, womit ein Alterungsprofil für jeden kalibrierten Sensor (11) erstellt wird.

2. Verfahren nach Anspruch 1,
**dadurch gekennzeichnet,**
**dass** vor dem Einsetzen des wenigstens einen Sensors (11) in die Sensoraufnahme (13) ein Ist - Temperaturwert von der Temperaturmesseinrichtung (1) an den Temperaturkalibrator (12) mittels des Kommunikationskanals (14) übertragen wird.

3. Verfahren nach Anspruch 1 oder 2,
**dadurch gekennzeichnet,**
**dass** nach der Übertragung des Kalibrierwertes vom Temperaturkalibrator (12) an die Temperaturmesseinrichtung (1) der Kalibrierwert von einem Prozessor (15) der Temperaturmesseinheit (10) oder von dem wenigstens einen Sensor (11) mit einem Datenmodul (17) zur Justierung der Temperaturmessung erfasst und verarbeitet wird.

4. Verfahren nach Anspruch 3,
**dadurch gekennzeichnet,**
**dass** nach der Erfassung und Verarbeitung des Kalibrierwertes vom Prozessor (15) der Temperaturmesseinheit (10) oder von dem Datenmodul (17) des wenigstens einen Sensors (11) ein Temperaturkontrollwert einer Anschlussmessung von der Temperaturmesseinheit (10) an den Temperaturkalibrator (12) übertragen wird.

5. Verfahren nach einem der vorgenannten Ansprüche,
**dadurch gekennzeichnet,**
**dass** der Kommunikationskanal (14) drahtlos ausgebildet ist und die Datenübertragung zwischen dem Temperaturkalibrator (12) und der Temperaturmesseinrichtung (1) oder dem Datenmodul (17) des wenigstens einen Sensors (11) über eine Nahfeldkommunikation ausgeführt wird

6. Verfahren nach einem der vorgenannten Ansprüche,
**dadurch gekennzeichnet,**
**dass** die Datenübertragung zwischen dem Temperaturkalibrator (12) und der Temperaturmesseinheit (10), dem wenigstens einen Sensor (11) oder einem Datenmodul (17) des wenigstens einen Sensors (11) der Temperaturmesseinrichtung (1) ausgeführt wird.

7. Verfahren nach einem der vorgenannten Ansprüche,
**dadurch gekennzeichnet,**
**dass** mit dem Kommunikationsmodul (19) eine Analyse von ermittelten Kalibrierwerten durchgeführt wird.

8. Temperaturkalibrator (12) zur Ausführung eines Verfahrens zum Kalibrieren einer Temperaturmesseinrichtung (1) nach einem der vorgenannten Ansprüche, wobei die Temperaturmesseinrichtung (1) eine Temperaturmesseinheit (10) und wenigstens einen über ein Sensorkabel (20) mit der Temperaturmesseinheit (10) verbundenen Sensor (11) aufweist, wobei der Temperaturkalibrator (12) ein Kommunikationsmodul (19) aufweist, mit dem der Kommunikationskanal (14) zur Temperaturmesseinrichtung (1) aufbaubar ist und mit dem eine Analyse von ermittelten Kalibrierwerten durchführbar ist, sodass die Funktionen der Kalibrierung, der Justage und einer Überprüfung des wenigstens einen Sensors (11) oder der Temperaturmesseinrichtung (10) vollständig automatisiert durchführbar sind, wobei der Temperaturkalibrator (12) eine ID-Leseeinheit zur automatischen Erkennung des wenigstens einen Sensors (11) und einen Datenspeicher (16) zur Speicherung von Sensordaten aufweist, und wobei der Temperaturkalibrator (12) dazu ausgebildet ist, bei aufeinander folgenden Kalibrierungen eines Sensors (11) eine Analyse von Kalibrierwerten durchzuführen, womit ein Alterungsprofil für jeden kalibrierten Sensor (11) erstellbar ist.

9. Temperaturkalibrator (12) nach Anspruch 8,
**dadurch gekennzeichnet,**
**dass** die Prüf- und Einstellparameter für die Durchführung des Verfahrens in dem ID-Träger (18) des wenigstens einen Sensors (11) abgelegt und aus diesem auslesbar sind, sodass die Kalibrierung, Justage und Überprüfung des wenigstens einen Sensors (11) und/oder der Temperaturmesseinheit (10) ohne Notwendigkeit von Neueingaben dieser Parameter ausführbar sind.

## Claims

1. A method for calibrating a temperature measuring device (1) having a temperature measuring unit (10) and having at least one sensor (11) connectable to the temperature measuring unit (10), wherein a temperature calibrator (12) having a sensor mount (13) is provided into which the at least one sensor (11) of the temperature measuring device (1) is inserted and is heated to a test temperature while the at least one sensor (11) is connected to the temperature measuring unit (10) by a sensor cable (20),
wherein the method at least comprises the following steps:
- providing a temperature calibrator (12) having a communication module (19);
- setting up a communication channel (14) for data transmission between the temperature calibrator (12) and the temperature measuring device (1) by the communication module (19); and
- transmitting a calibration value from the temperature calibrator (12) to the temperature measuring device (1) by means of the communication channel (14).,
wherein the at least one sensor (11) has an ID carrier (18) readable optically or by means of an electromagnetic signal and the temperature calibrator (12) comprises an ID reading unit, wherein the ID carrier (18) of the at least one sensor (11) is read by the temperature calibrator (12) for the automatic recognition of the at least one sensor (11) before the calibration of the ID carrier (18) of the at least one sensor (11), wherein a data memory (16) is integrated in the temperature calibrator (12), wherein at least the calibration value is stored, in association, for every calibrated sensor (11) in the data memory (16), and wherein, on consecutive calibrations of a sensor (11), an analysis of calibration values being carried out by means of the temperature calibrator (12) so that an aging profile is prepared for every calibrated sensor (11).

2. A method in accordance with claim 1,
**characterized in that**
an actual temperature value is transmitted from the temperature measuring device (1) to the temperature calibrator (12) by means of the communication channel (14) before the insertion of the at least one sensor (11) into the sensor mount (13).

3. A method in accordance with claim 1 or claim 2,
**characterized in that**
the calibration value is detected and processed by a processor (15) of the temperature measuring unit (10) or by the at least one sensor (11) having a data module (17) for an adjustment of the temperature measurement after the transmission of the calibration value from the temperature calibrator (12) to the temperature measuring device (1).

4. A method in accordance with claim 3,
**characterized in that**
a temperature control value of a subsequent measurement is transmitted from the temperature measuring unit (10) to the temperature calibrator (12) after the detection and processing of the calibration value by the processor (15) of the temperature measuring unit (10) or by the data module (17) of the at least one sensor (11).

5. A method in accordance with one of the preceding claims,
**characterized in that**
the communication channel (14) is configured as wireless and the data transmission between the temperature calibrator (12) and the temperature measuring device (1) or the data module (17) of the at least one sensor (11) is carried out via near field communication.

6. A method in accordance with one of the preceding claims,
**characterized in that**
the data transmission is carried out between the temperature calibrator (12) and the temperature measuring unit (10), the at least one sensor (11), or a data module (17) of the at least one sensor (11) of the temperature measuring device (1).

7. A method in accordance with one of the preceding claims,
**characterized in that**
an analysis of determined calibration values is carried out by the communication module (19).

8. A temperature calibrator (12) for carrying out a method for calibrating a temperature measuring device (1) in accordance with one of the preceding claims,
wherein the temperature measuring device (1) has a temperature measuring unit (10) and at least one sensor (11) connected to the temperature measuring unit (10) by a sensor cable (20),
wherein the temperature calibrator (12) has a communication module (19) by which the communication channel (14) to the temperature measuring device (1) can be set up and by which an analysis of determined calibration values can be carried out so that the functions of the calibration, of the adjustment, and a check of the at least one sensor (11) or of the temperature measuring device (10) can be carried out in a completely automated manner, wherein the temperature calibrator (12) has an ID reading unit for the automatic recognition of the at least one sensor (11) and a data memory (16) for storing sensor data, and wherein the temperature calibrator (12) is configured, on consecutive calibrations of a sensor (11), to carry out an analysis of calibration values so that an aging profile can be prepared for every calibrated sensor (11).

9. A temperature calibrator (12) in accordance with claim 8,
**characterized in that**
the test and setting parameters for the carrying out of the method are stored in and are readable from the ID carrier (18) of the at least one sensor (11) so that the calibration, adjustment, and check of the sensor (11) and/or of the temperature measuring unit (10) can be carried out without the necessity of new inputs of these parameters.

## Revendications

1. Procédé d'étalonnage d'un dispositif de mesure de température (1) comportant une unité de mesure de température (10) et au moins un capteur (11) susceptible d'être raccordé à l'unité de mesure de température (10), dans lequel est mis à disposition un étalonneur de température (12) doté d'un logement de capteur (13) dans lequel l'au moins un capteur (11) du dispositif de mesure de température (1) est inséré et chauffé à une température d'essai pendant que l'au moins un capteur (11) est relié à l'unité de mesure de température (10) par le biais d'un câble de capteur (20), le procédé présentant au moins les étapes suivantes :
- mise à disposition d'un étalonneur de température (12) doté d'un module de communication (19),
- établissement d'un canal de communication (14) pour la transmission de données entre l'étalonneur de température (12) et le dispositif de mesure de température (1) au moyen du module de communication (19) et
- transmission d'une valeur d'étalonnage de l'étalonneur de température (12) au dispositif de mesure de température (1) au moyen du canal de communication (14),
dans lequel l'au moins un capteur (11) présente un support d'identification (18) lisible de manière optique ou au moyen d'un signal électromagnétique et l'étalonneur de température (12) comprend une unité de lecture d'identification, dans lequel, avant l'étalonnage, le support d'identification (18) de l'au moins un capteur (11) est lu par l'étalonneur de température (12) pour la reconnaissance automatique de l'au moins un capteur (11), dans lequel une mémoire de données (16) est intégrée dans l'étalonneur de température (12), dans lequel au moins la valeur d'étalonnage est stockée dans la mémoire de données (16) de manière associée pour chaque capteur (11), dans lequel lors d'étalonnages successifs d'un capteur (11) au moyen de l'étalonneur de température (12), une analyse de valeurs d'étalonnage est effectuée, moyennant quoi un profil de vieillissement est créé pour chaque capteur (11) étalonné.

2. Procédé selon la revendication 1,
**caractérisé en ce que**,
avant l'insertion de l'au moins un capteur (11) dans le logement de capteur (13), une valeur réelle de température est transmise du dispositif de mesure de température (1) à l'étalonneur de température (12) au moyen du canal de communication (14).

3. Procédé selon la revendication 1 ou 2,
**caractérisé en ce que**,
après la transmission de la valeur d'étalonnage de l'étalonneur de température (12) au dispositif de mesure de température (1), la valeur d'étalonnage est détectée et traitée par un processeur (15) de l'unité de mesure de température (10) ou par l'au moins un capteur (11) avec un module de données (17) pour l'ajustage de la mesure de température.

4. Procédé selon la revendication 3,
**caractérisé en ce que**
après la détection et le traitement de la valeur d'étalonnage par le processeur (15) de l'unité de mesure de température (10) ou par le module de données (17) de l'au moins un capteur (11), une valeur de contrôle de température d'une mesure suivante est transmise par l'unité de mesure de température (10) à l'étalonneur de température (12).

5. Procédé selon l'une des revendications précédentes,
**caractérisé en ce que**
le canal de communication (14) est réalisé sans fil et la transmission de données entre l'étalonneur de température (12) et le dispositif de mesure de température (1) ou le module de données (17) de l'au moins un capteur (11) est exécutée par le biais d'une communication en champ proche.

6. Procédé selon l'une des revendications précédentes,
**caractérisé en ce que**
la transmission de données est exécutée entre l'étalonneur de température (12) et l'unité de mesure de température (10), l'au moins un capteur (11) ou un module de données (17) de l'au moins un capteur (11) du dispositif de mesure de température (1).

7. Procédé selon l'une des revendications précédentes,
**caractérisé en ce que**
une analyse de valeurs d'étalonnage déterminées est effectuée au moyen du module de communication (19).

8. Étalonneur de température (12) destiné à exécuter un procédé d'étalonnage d'un dispositif de mesure de température (1) selon l'une des revendications précédentes, dans lequel le dispositif de mesure de température (1) présente une unité de mesure de température (10) et au moins un capteur (11) relié à l'unité de mesure de température (10) par le biais d'un câble de capteur (20),
dans lequel l'étalonneur de température (12) présente un module de communication (19), au moyen duquel le canal de communication (14) avec le dispositif de mesure de température (1) peut être établi et au moyen duquel une analyse de valeurs d'étalonnage déterminées peut être effectuée, de telle sorte que les fonctions de l'étalonnage, de l'ajustage et d'une vérification de l'au moins un capteur (11) ou du dispositif de mesure de température (10) peuvent être effectuées de manière entièrement automatisée, l'étalonneur de température (12) présentant une unité de lecture d'identification pour la reconnaissance automatique de l'au moins un capteur (11) et une mémoire de données (16) pour enregistrer des données de capteur, et l'étalonneur de température (12) étant conçu pour effectuer, lors d'étalonnages successifs d'un capteur (11), une analyse de valeurs d'étalonnage, moyennant quoi un profil de vieillissement peut être créé pour chaque capteur (11) étalonné.

9. Étalonneur de température (12) selon la revendication 8, **caractérisé en ce que** les paramètres d'essai et de réglage pour la mise en oeuvre du procédé sont stockés dans le support d'identification (18) de l'au moins un capteur (11) et peuvent être lus depuis celui-ci, de telle sorte que l'étalonnage, l'ajustage et la vérification de l'au moins un capteur (11) et/ou de l'unité de mesure de température (10) peuvent être exécutés sans nécessiter de nouvelle saisie de ces paramètres.
